# EUROPÄISCHE PATENTSCHRIFT

(11) **EP 3 628 510 B1**
(45) Veröffentlichungstag und Bekanntmachung des Hinweises auf die Patenterteilung: **09.06.2021**
(21) Anmeldenummer: 19192427.3
(22) Anmeldetag: 20.08.2019
(51) Int. Cl.: B60C 11/04, B60C 11/13, B60C 11/03

(54) **FAHRZEUGLUFTREIFEN**
PNEUMATIC TYRE
PNEUMATIQUES DE VÉHICULE

(30) Priorität: 27.09.2018 DE 102018216556
(43) Veröffentlichungstag der Anmeldung: 01.04.2020
(73) Patentinhaber: Continental Reifen Deutschland GmbH, 30165 Hannover (DE)
(72) Erfinder: Baumgartner, Lars, 30165 Hannover (DE); Urbanek, Matthias, 30165 Hannover (DE); Behr, Ulrich, 30165 Hannover (DE)
(74) Vertreter: Continental Corporation

(56) Entgegenhaltungen:
- EP-A1- 3 181 378
- WO-A1-2017/115195
- DE-A1-102009 044 361
- DE-A1-102012 109 712
- DE-A1-102015 202 614
- DE-A1-102015 219 434
- US-A- 4 977 942

## Beschreibung

Die Erfindung betrifft einen Fahrzeugluftreifen mit einem Laufstreifen mit zumindest einer von einer Umfangsrille begrenzten schulterseitigen Profilrippe mit einer an der Laufstreifenperipherie liegenden Außenfläche, wobei die Profilrippe mit einer Vielzahl von parallel zueinander sowie gerade oder bogenförmig verlaufenden, vor der Umfangsrille endenden Querrillen versehen ist, welche jeweils zwei Rillenkanten an der Außenfläche der Profilrippe, zwei von den Rillenkanten ausgehende Rillenwände, einen Hauptabschnitt und einen laufstreifeninnenseitig an den Hauptabschnitt anschließenden, zur Außenfläche der Profilrippe auslaufenden Auslaufabschnitt aufweisen.

Ein derartiger Fahrzeugluftreifen ist beispielsweise aus der DE 10 2009 044 361 A1 bekannt. Der Fahrzeugluftreifen weist daher einen Laufstreifen mit einer schulterseitigen Profilrippe auf, welche von einer Umfangsrille begrenzt ist und in welcher vor dieser endende Querrillen verlaufen. Der Auslaufabschnitt der Querrillen weist einen Boden auf, welcher, in Erstreckungsrichtung der Querrille betrachtet, S-förmig geschwungen ist. Der Boden umfasst einen mittleren Abschnitt, welcher zur radialen Richtung unter einem Winkel von 50° bis 70° geneigt ist. Querrillen mit derartiger Auslaufabschnitten sind für die Wasserableiteigenschaften von Vorteil.

Aus der DE 10 2011 056 636 A1 ein Fahrzeugluftreifen mit einem Laufstreifen mit einer schulterseitigen Profilrippe, welche ebenfalls mit innerhalb der Profilrippe endenden Querrillen versehen ist, bekannt. Am laufstreifeninnenseitigen Ende jeder Querrille ist eine zwischen dem Rillengrund und der Laufstreifenperipherie verlaufende Eckflanke ausgebildet, welche halbkreisförmig ausgeführt ist und am Rillengrund in einen kugelabschnittsförmigen Endabschnitt des Rillenbodens übergeht. Zumindest eine der Rillenwände der Querrillen kann angefast sein, wobei die Fase insbesondere über die Eckflanke umlaufend fortgesetzt ist. Durch diese Maßnahmen sollen am laufstreifeninnenseitigen Ende der Querrille nur geringe Kerbspannungen auftreten.

Aus der DE 10 2012 109 712 A1 ist ein weiterer Fahrzeugluftreifen mit einem Laufstreifen mit einer von einer Umfangsrille begrenzten schulterseitigen Profilrippe, welche mit einer Vielzahl von parallel zueinander verlaufenden Querrillen versehen ist, bekannt. Die Querrillen setzen sich aus drei Rillenabschnitten - zwei äußeren Rillenabschnitten und einem zwischen diesen verlaufenden mittleren Rillenabschnitt - zusammen. Die äußeren Rillenabschnitte verlaufen im Wesentlichen in axialer Richtung, der mittlere Rillenabschnitt schließt mit jedem äußeren Rillenabschnitt einen stumpfen Winkel von bis zu 135° ein. In den äußeren Rillenabschnitten setzen sich die Rillenflanken aus einem radial inneren Flankenabschnitt und einer radial äußeren Fase zusammen. Der mittlere Rillenabschnitt ist von zwei Fasen begrenzt. Der Reifen weist ein gutes Aquaplaningverhalten im Bereich der Außenschulter auf, wobei eine hohe Quersteifigkeit für gute Trockenhandlingeigenschaften erhalten bleibt.

Die WO 2017 115 195 A1 offenbart einen Fahrzeugluftreifen mit einem Laufstreifen mit schulterseitigen Profilrippen, welche jeweils von einer Umfangsrille begrenzt sind und in welchen Querrillen verlaufen. Gemäß einem Ausführungsbeispiel verlaufen die in der einen schulterseitigen Profilrippe ausgebildeten Querrillen leicht bogenförmig, enden vor der entsprechenden Umfangsrille und weisen abschnittsweise mit Fasen versehene Rillenwände auf. Die in der zweiten schulterseitigen Profilrippe ausgebildeten Querrillen münden in die diese Profilrippe begrenzende Umfangsrille ein und setzen sich jeweils aus einem Hauptabschnitt und einem laufstreifeninnenseitig an diesen anschließenden, in die Umfangsrille einmündenden, gegenüber dem Hauptabschnitt schmäler ausgeführten Rillenabschnitt zusammen. Die Rillenwände der Querrillen der zweiten schulterseitigen Profilrippe sind jeweils mit einer Fase versehen, welche zumindest über 50% der Erstreckungslänge der Querrille und beim Ausführungsbeispiel über die gesamte Rillenflanke verläuft.

Die in schulterseitigen Profilrippen verlaufenden Querrillen tragen maßgeblich zur Entwässerung der Profilrippen bei und stellen Griffkanten zur Verfügung. Im Hinblick auf das Entwässerungsvermögen der Querrillen ist es vorteilhaft, wenn diese ein möglichst großes Leervolumen aufweisen, welches zur Folge hat, dass die Querrillen beim Abrollen des Reifens maßgeblich zum Abrollgeräusch beitragen.

Der Erfindung liegt daher die Aufgabe zugrunde, bei einem Fahrzeugluftreifen der eingangs genannten Art den Beitrag der schulterseitigen Profilrippe zum Abrollgeräusch zu reduzieren, wobei die Profilrippe weiterhin eine gute Wasserableitung auf nassem Untergrund sicherstellen soll.

Gelöst wird die gestellte Aufgabe erfindungsgemäß dadurch, dass der Auslaufabschnitt schmäler ausgeführt ist als der Hauptabschnitt, wobei die eine Rillenwand am Auslaufabschnitt endet und die andere Rillenwand im Auslaufabschnitt fortgeführt ist, wobei der Auslaufabschnitt der fortgeführten Rillenwand gegenüberliegend durch eine Flanke begrenzt ist, welche zumindest abschnittsweise zur Außenfläche der Profilrippe angefast ist und daher eine Fase aufweist, welche an der Außenfläche der Profilrippe von einer Fasenkante begrenzt ist, welche an die Rillenkante der am Auslaufabschnitt endenden Rillenwand anschließt und in Fortsetzung sowie knickfrei mit dieser Rillenkante verläuft.

Durch den schmäler ausgeführten Auslaufabschnitt werden die Querrillen verjüngt und das Leervolumen der Querrillen innerhalb der Bodenaufstandsfläche etwas reduziert, wodurch der von der schulterseitigen Profilrippe verursachte Anteil am Abrollgeräusch deutlich verringert wird. Die im Auslaufabschnitt ausgebildete Fase vergrößert den Querschnitt der Querrillen lokal bei der Laufstreifenperipherie, sodass die Querrillen weiterhin ein gutes Wasserableitvermögen aufweisen. Die in Fortsetzung der Rillenkante verlaufende Fasenkante ist insbesondere im Hinblick auf ein geringes Abrollgeräusch von Vorteil.

Ein vorteilhafter Kompromiss zwischen einem geringen Abrollgeräusch und einer wirksamen Wasserableitung wird erzielt, wenn der Auslaufabschnitt im Bereich radial innerhalb der Fase eine Breite von 40% bis 60%, insbesondere von 45% bis 55%, der größten Breite des Hauptabschnittes an der Laufstreifenperipherie aufweist.

In diesem Zusammenhang ist es ferner von Vorteil, wenn der Auslaufabschnitt eine Erstreckungslänge aufweist, welche 35% bis 70%, insbesondere von 50% bis 60%, der Erstreckungslänge des Hauptabschnittes innerhalb der Bodenaufstandsfläche beträgt.

Bevorzugter Weise verläuft die Fase, im Querschnitt betrachtet, zur radialen Richtung unter einem konstanten Winkel von 30° bis 55°, insbesondere von 43° bis 47°. Durch diese Maßnahme "rollt" sich die Fasenkante bei Bremsvorgängen nicht ein und die Querrille wird auf eine für die Entwässerung der Profilrippe vorteilhafte Weise an der Laufstreifenperipherie "geöffnet".

Der Kompromiss zwischen geringem Abrollgeräusch und wirksamen Wasserableiteigenschaften der Profilrippe lässt sich weiter optimieren, wenn die Fase nur über 30% bis 60% der Erstreckungslänge des Auslaufabschnittes verläuft.

Darüber hinaus ist es von Vorteil, wenn der Auslaufabschnitt vor der Umfangsrille in einem in axialer Richtung ermittelten Abstand von 2,0 mm bis 10,0 mm, insbesondere von mindestens 5,0 mm, endet. Durch diese Maßnahme lässt sich vor allem eine wirksame Entwässerung der Profilrippe unter Beibehaltung einer hohen Steifigkeit der Profilrippe erreichen.

Eine besonders verwirbelungsarme Wassereinströmung von der Außenfläche der Profilrippe in die Querrille wird dadurch ermöglicht, dass der Auslaufabschnitt einen Boden aufweist, welcher knickfrei an den Rillengrund der Querrille und knickfrei an die Außenfläche der Profilrippe anschließt.

Zur Stabilisierung der Profilrippe ist es ferner von Vorteil, wenn der Boden einen mittleren Bodenabschnitt aufweist, welcher, im Längsschnitt der Querrille betrachtet, zur radialen Richtung unter einem Winkel von 20° bis 50°, insbesondere von 25° bis 35°, verläuft.

Gemäß einer weiteren bevorzugten Ausführungsvariante weist die im Auslaufabschnitt fortgeführte Rillenwand eine sich zumindest über den Hauptabschnitt erstreckende, zur Außenfläche der Profilrippe verlaufende Fase auf, welche, im Querschnitt betrachtet, als gerade Linie erscheint und zur radialen Richtung unter einem Winkel verläuft, wobei der Winkel vom laufstreifenaußenseitigen Ende der Fase zum laufstreifeninnenseitigen Ende der Fase kontinuierlich zunimmt, sodass die Fase eine sich gegenüber der radialen Richtung verdrehende Fläche ist. Durch diese spezielle Fase wird die Querrille zusätzlich aufgeweitet, sodass die Entwässerungswirkung der Querrille verbessert wird.

Bei dieser Ausführungsvariante ist es vorteilhaft, wenn die Fase im Auslaufabschnitt der Querrille ausläuft. Diese Maßnahme trägt insbesondere zu einer verwirbelungsarmen Wassereinleitung in die Querrille bei.

Ferner ist es bei dieser weiteren Ausführungsvariante von Vorteil, wenn die Fase, im Querschnitt betrachtet, eine in die Laufstreifenperipherie projizierte Breite aufweist, welche innerhalb des Hauptabschnittes und des Auslaufabschnittes ausgehend vom laufstreifenaußenseitigen Ende des Hauptabschnittes kontinuierlich in Richtung zur Laufstreifeninnenseite abnimmt. Da sich der Hauptabschnitt der Querrille häufig über den seitlichen Rand der Bodenaufstandsfläche hinauserstreckt weist die Fase durch diese Maßnahme ihre breiteste Stelle außerhalb der Bodenaufstandsfläche auf und unterstützt eine gute Wasserableitung nach außen.

Bevorzugt beträgt bei dieser Ausführungsvariante die in die Laufstreifenperipherie projizierte Breite der Fase an der breitesten Stelle der Fase 1,5 mm bis 4,0 mm, insbesondere höchstens 3,0 mm.

Für ein geringes Abrollgeräusch ist es ferner vorteilhaft, wenn diese Fase, im Querschnitt betrachtet, in radialer Richtung bis in eine konstante Tiefe von 0,7 mm bis 2,0 mm, insbesondere von mindestens 1,0 mm, verläuft.

Eine weitere Maßnahme, welche insbesondere im Hinblick auf das Abrollgeräusch vorteilhaft ist, ist dadurch gekennzeichnet, dass die Querrillen in Draufsicht bogenförmig verlaufen, wobei die Rillenwand, welche am Auslaufabschnitt endet, die bogenaußenseitige Rillenwand ist und die Rillenwand, welche in den Auslaufabschnitt fortgeführt ist, die bogenaußeninnenseitige Rillenwand ist.

Weitere Merkmale, Vorteile und Einzelheiten der Erfindung werden nun anhand der Zeichnung, die schematisch ein Ausführungsbeispiel der Erfindung darstellt zeigt, näher erläutert. Dabei zeigen

Weitere Merkmale, Vorteile und Einzelheiten der Erfindung werden nun anhand der Zeichnung, die schematisch ein Ausführungsbeispiel der Erfindung zeigt, näher erläutert.

Dabei zeigen
Fig. 1 einen Umfangsabschnitt einer schulterseitigen Profilrippe eines Laufstreifens eines Fahrzeugluftreifens,
Fig. 2 einen Schnitt entlang der Linie II-II der Fig. 1,
Fig. 3 einen Schnitt entlang der Linie III-III der Fig. 1,
Fig. 4 einen Schnitt entlang der Linie IV-IV der Fig. 1 und
Fig. 5 einen Schnitt entlang der Linie V-V der Fig. 1.

Gemäß der Erfindung ausgeführte Fahrzeugluftreifen sind insbesondere Reifen in Radialbauart für Personenkraftwagen, Vans oder Light-Trucks.

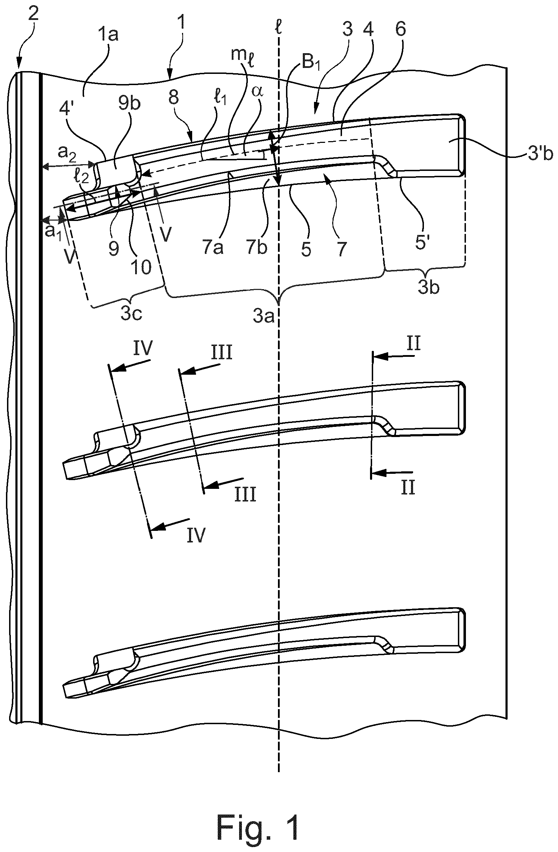

Fig. 1 zeigt einen Umfangsabschnitt einer schulterseitigen Profilrippe 1 mit einer an der Laufstreifenperipherie liegenden Außenfläche 1a. Der seitliche Rand der Bodenaufstandsfläche (ermittelt mit einem auf einer Normfelge montierten Reifen, Last bei 70 % der maximalen Tragfähigkeit, Innendruck 85 % des Normdruckes, gemäß ETRTO-Standards) ist durch eine gestrichelte Linie 1 gekennzeichnet. Die nicht gezeigten Laufstreifenbereiche können in bekannter Weise ausgeführt sein, wobei im zweiten, nicht gezeigten schulterseitigen Laufstreifenbereich vorzugsweise eine zur schulterseitigen Profilrippe 1 analog ausgeführte schulterseitige Profilrippe vorgesehen ist.

Die schulterseitige Profilrippe 1 ist laufstreifeninnseitig von einer in Fig. 1 lediglich angedeuteten, beim gezeigten Ausführungsbeispiel in Draufsicht gerade verlaufenden, schulterseitigen Umfangsrille 2 begrenzt, welche vorzugsweise auf die jeweils vorgesehene Profiltiefe ausgeführt ist, die für Personenkraftwagen, Vans oder Light-Trucks üblicherweise 6,5 mm bis 8,5 mm beträgt.

Die schulterseitige Profilrippe 1 ist mit einer Vielzahl von parallel zueinander verlaufenden Querrillen 3 versehen, welche über den seitlichen Rand der Bodenaufstandsfläche hinausverlaufen und vor der Umfangsrille 2 in einem in axialer Richtung ermittelten Abstand a₁ von 2,0 mm bis 10,0 mm, insbesondere von mindestens 5,0 mm, enden. Die weitere Ausgestaltung der Querrillen 3 wird nachfolgend anhand einer einzelnen Querrille 3 genauer erläutert.

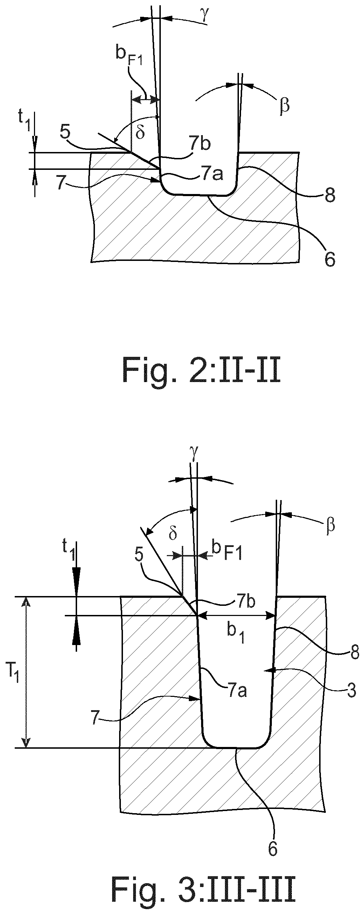

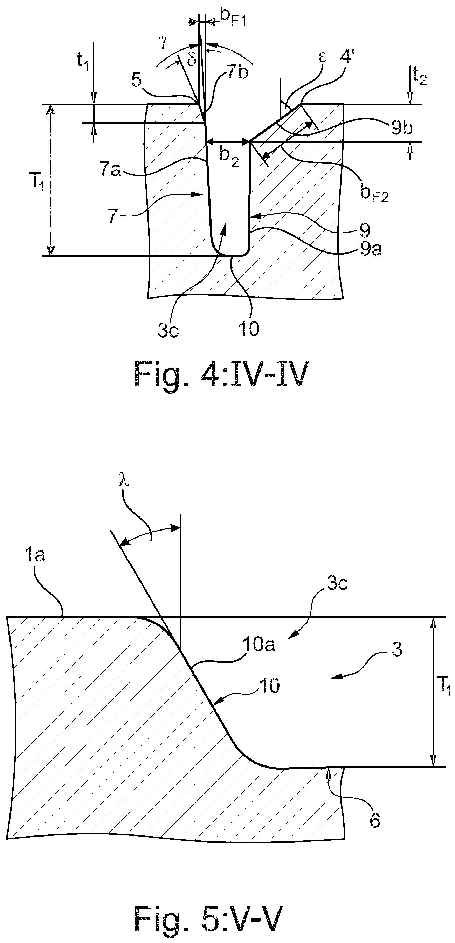

Die Querrille 3 verläuft in Draufsicht leicht bogenförmig und setzt sich aus einem abschnittweise innerhalb und abschnittsweise außerhalb der Bodenaufstandsfläche verlaufenden Hauptabschnitt 3a, einem an das laufstreifenaußenseitige Ende des Hauptabschnittes 3a anschließenden Schulterabschnitt 3b und einem an das laufstreifeninnenseitige Ende des Hauptabschnittes 3a anschließenden Auslaufabschnitt 3c zusammen. Die Querrille 3 verläuft - bezogen auf eine in Erstreckungsrichtung des Hauptabschnittes 3a ausgerichtete Mittellinie m₁ - zur axialen Richtung unter einem Winkel α von insbesondere bis zu 20°, vorzugsweise von bis zu 10°. Der Hauptabschnitt 3a erstreckt sich über mindestens 50% der entlang und in Verlängerung der Mittellinie m₁ ermittelten Erstreckungslänge der Querrille 3 und weist innerhalb der Bodenaufstandsfläche eine entlang der Mittellinie m₁ ermittelten Erstreckungslänge l₁ von vorzugsweise 10,0 mm bis 25,0 mm auf. Innerhalb der Bodenaufstandsfläche weist der Hauptabschnitt 3a und daher auch die Querrille 3 in radialer Richtung eine Tiefe T₁ (Fig. 3 und Fig. 5) von vorzugsweise 90% bis 100% der Profiltiefe auf. Außerhalb der Bodenaufstandsfläche wird der Hauptabschnitt 3a insbesondere in bekannter Weise seichter und geht in den Schulterabschnitt 3b über, welcher von einer zur nicht dargestellten Seitenwand des Reifens unter kontinuierlicher Verringerung ihrer Tiefe auslaufenden seichten Vertiefung 3'b gebildet ist.

An der Außenfläche 1a der Profilrippe 1 weist die Querrille 3 eine bogenaußenseitige Rillenkante 4 und eine bogenaußeninnenseitige Rillenkante 5 auf, wobei die bogeninnenseitige Rillenkante 5 jene der beiden Rillenkanten 4, 5 ist, bei welcher, in Draufsicht betrachtet, eine die Enden der Rillenkante verbindende Linie außerhalb der Querrille 3 verläuft. Die bogenaußenseitige Rillenkante 4 erstreckt sich über den Hauptabschnitt 3a und den Schulterabschnitt 3b und die bogeninnenseitige Rillenkante 5 erstreckt sich über die gesamte Querrille 3 und daher über den Hauptabschnitt 3a, den Schulterabschnitt 3b und den Auslaufabschnitt 3c. Ein zwischen der bogenaußenseitigen Rillenkante 4 und der bogenaußeninnenseitigen Rillenkante 5 ermittelter gegenseitiger lichter Abstand nimmt in Richtung zum laufstreifenaußenseitigen Ende der Querrille 3 geringfügig und kontinuierlich zu.

Die Querrille 3 weist ferner einen über den Hauptabschnitt 3a und den Schulterabschnitt 3b verlaufenden Rillengrund 6, eine bogeninnenseitige Rillenwand 7 und eine bogenaußenseitige Rillenwand 8 auf.

Die bogenaußenseitige Rillenwand 8 endet an der bogenaußenseitige Rillenkante 4 und erstreckt sich daher über den Hauptabschnitt 3a und den Schulterabschnitt 3b. Die bogenaußenseitige Rillenwand 8 verläuft in Draufsicht daher zumindest im Wesentlichen übereinstimmend zur bogenaußenseitige Rillenkante 4 gebogen und verläuft ferner, im Querschnitt betrachtet, zur radialen Richtung unter einem Winkel β (Fig. 2 und Fig. 3) von bis insbesondere zu 7°, kann jedoch auch in radialer Richtung verlaufen.

Die bogeninnenseitige Rillenwand 7 erstreckt sich über den Hauptabschnitt 3a und den Auslaufabschnitt 3c und endet an der Außenfläche 1a der Profilrippe 1 an der bogeninnenseitigen Rillenkante 5, wobei die bogeninnenseitige Rillenwand 7 zumindest über den gesamten Hauptabschnitt 3a zur Außenfläche 1a der Profilrippe 1 angefast ist. Die bogeninnenseitige Rillenwand 7 setzt sich, im Querschnitt betrachtet, aus einem an den Rillengrund 6 anschließenden, geraden Wandabschnitt 7a und einem zur bogeninnenseitigen Rillenkante 5 verlaufenden Fase 7b (Fig. 2 bis Fig. 4) zusammen. Der Wandabschnitt 7a der bogeninnenseitige Rillenwand 7 verläuft in Draufsicht parallel oder im Wesentlichen parallel zur bogenaußenseitigen Rillenwand 8, ist, im Querschnitt betrachtet, zur radialen Richtung unter einem Winkel γ (Fig. 2 bis Fig. 4) von insbesondere bis 7° geneigt, kann daher auch in radialer Richtung verlaufen, und endet im Auslaufabschnitt 3c zumindest abschnittsweise an der bogeninnenseitigen Rillenkante 5.

Der Hauptabschnitt 3a weist innerhalb der Bodenaufstandsfläche an seiner breitesten Stelle zwischen der Rillenkante 4 und der Rillenkante 5 eine senkrecht zur Mittellinie m₁ ermittelte Breite B₁ von 4,0 mm bis 11,0 mm auf. Ferner weist der Hauptabschnitt 3a zwischen dem radial äußeren Ende des Wandabschnittes 7a der bogeninnenseitige Rillenwand 7 und der bogenaußenseitigen Rillenwand 8 eine zumindest im Wesentlichen konstante Breite b₁ (Fig. 3) von 2,0 mm bis 8,0 mm auf.

Wie Fig. 2 bis Fig. 4 zeigen, schließt die Fase 7b über ihre gesamte Erstreckung in radialer Richtung in einer konstanten Tiefe t₁ von 0,7 mm bis 2,0 mm, insbesondere von mindestens 1,0 mm, an das radial äußere Ende des Wandabschnittes 7a an und läuft, wie Fig. 1 zeigt, beim gezeigten Ausführungsbeispiel laufstreifenaußenseitig am bzw. im Schulterabschnitt 3b aus, welcher seinerseits an der Außenfläche 1a der Profilrippe 1 durch einen über die Fase 7b hinausverlaufenden, laufstreifenaußenseitigen Kantenabschnitt 5' der bogeninnenseitige Rillenkante 5 begrenzt ist (Fig. 1). Beim gezeigten Ausführungsbeispiel weist der Schulterabschnitt 3b bzw. die ihn bildende flache Vertiefung 3'b daher eine Breite auf, welche gegenüber der erwähnten Breite b₁ des Hauptabschnittes 3a größer ist und gegenüber dieser "sprunghaft" zunimmt.

Wie Fig. 2 bis Fig. 4 ferner zeigen, ist die Fase 7b, im Querschnitt betrachtet, eine gerade Linie, wobei die Fase 7b insbesondere zur radialen Richtung unter einem Winkel δ verläuft. Der Winkel δ nimmt über die Erstreckung der Fase 7b vom laufstreifenaußenseitigen Kantenabschnitt 5' zum laufstreifeninnenseitigen Ende der Fase 7b kontinuierlich zu, sodass die Fase 7b eine sich über ihre Erstreckung gegenüber der radialen Richtung verdrehende Fläche ist, wobei die Fase 7b im Auslaufabschnitt 3c am ebenen Wandabschnitt 7a ausläuft und daher der Winkel δ Fase 7b in den Winkel γ des Wandabschnittes 7a übergeht (Fig. 1).

Da die Fase 7b, wie bereits erwähnt, in der konstanten Tiefe t₁ an den Wandabschnitt 7a anschließt und sich ihr Winkel δ auf die beschriebene Weise kontinuierlich ändert, weist die Fase 7b, im Querschnitt betrachtet, eine vom Anschlussbereich des Hauptabschnittes 3a an den Schulterabschnitt 3b zu ihrem laufstreifeninnenseitigen Ende kontinuierlich abnehmende, in die Laufstreifenperipherie projizierte Breite b_{F1} (Fig. 2 bis Fig. 4) auf. An der breitesten Stelle der Fase 7b beträgt die Breite b_{F1} 1,5 mm bis 4,0 mm, insbesondere höchstens 3,0 mm. Die jeweils lokale Größe des erwähnten Winkels δ ergibt sich aus der jeweiligen lokalen Breite b_{F1} und der gewählten, bereits erwähnten Tiefe t₁ der Fase 7b.

Gemäß Fig. 1 ist der Auslaufabschnitt 3c schmäler ausgeführt als der Hauptabschnitt 3a und weist eine in Verlaufsrichtung ermittelt Erstreckungslänge l₂ von 35% bis 70%, insbesondere von 50% bis 60%, der bereits erwähnten, innerhalb der Bodenaufstandsfläche ermittelten Erstreckungslänge l₁ des Hauptabschnittes 3a auf. Im Auslaufabschnitt 3c ist die bogeninnenseitigen Rillenwand 7 fortgeführt, wobei der Auslaufabschnitt 3c, wie Fig. 1 in Verbindung mit Fig. 4 zeigt, im Querschnitt betrachtet, durch einen laufstreifeninnenseitigen Endabschnitt der bogeninnenseitigen Rillenwand 7, insbesondere durch einen entsprechenden Endabschnitt des Wandabschnittes 7a, einer diesem Endabschnitt gegenüberliegenden Flanke 9 und einem an den Rillengrund 6 anschließenden Boden 10 (siehe auch Fig. 5) begrenzt ist.

Wie Fig. 1 in Verbindung mit Fig. 4 ferner zeigt, ist die Flanke 9 in ihrem an den Hauptabschnitt 3a angrenzenden Bereich zur Außenfläche 1a der schulterseitigen Profilrippe 1 abschnittsweise angefast, sodass sich die Flanke 9 aus einem an den Boden 10 anschließenden, im Querschnitt beispielsweise in radialer Richtung verlaufenden Flankenabschnitt 9a und einer Fase 9b zusammensetzt, welche an der Außenfläche 1a der Profilrippe 1 von einer in Fortsetzung der Rillenkante 4 verlaufenden Fasenkante 4' begrenzt ist.

Wie Fig. 4 zeigt, ist die Fase 9b eine Schrägfläche, welche im Querschnitt betrachtet, zur radialen Richtung unter einem konstanten Winkel ε von 30° bis 55°, insbesondere von 43° bis 47°, verläuft, ferner in radialer Richtung bis in eine vorzugsweise konstante Tiefe t₂ von 1,5 mm bis 3,0 mm reicht und daher eine vorzugsweise kontante Breite b_{F2} aufweist. Ferner verläuft die Fase 9b insbesondere über 30% bis 60% der Erstreckungslänge l₂ des Auslaufabschnittes 3c. Die Breite b_{F2} und der Winkel ε der Fase 9b sind derart aufeinander abgestimmt, dass der Auslaufabschnitt 3c, im Querschnitt betrachtet, in der erwähnten Tiefe t₂ zwischen dem radial inneren Ende der Fase 9b und dem Wandabschnitt 7a eine Breite b₂ von 40% bis 60%, insbesondere von 45% bis 55%, der Breite B₁ des Hauptabschnittes 3a aufweist (Fig. 3). Ferner ist die Länge l_{F2} der Fase 9b derart gewählt, dass die Fasenkante 4' vor der Umfangsrille 2 in einem in axialer Richtung ermittelten Abstand a₂ von vorzugsweise 4,0 mm bis 12,0 mm endet, wobei der Abstand a₂, bedingt durch die "abschnittsweise Anfasung" der Flanke 9 größer ist als der bereits erwähnte Abstand a₁, in welchem die Querrille 3 vor der schulterseitigen Umfangsrille 1 endet.

Wie Fig. 5 zeigt, verläuft der Boden 10 des Auslaufabschnittes 3c vom Rillengrund 6 zur Außenfläche 1a der Profilrippe 1. Der Boden 10 ist, im in Erstreckungsrichtung der Querrille 3 ausgerichteten Längsschnitt betrachtet, S-förmig geschwungen, schließt knickfrei an den Rillengrund 6 an und geht knickfrei in die Außenfläche 1a der Profilrippe 1 über. Der Boden 10 weist einen mittleren Bodenabschnitt 10a auf, welcher, im in Erstreckungsrichtung der Querrille 3 ausgerichtete Längsschnitt betrachtet, zur radialen Richtung unter einem Winkel λ von 20° bis 50°, insbesondere von 25° bis 35°, verläuft.

Die Erfindung ist auf das beschriebene Ausführungsbeispiel nicht beschränkt.

Insbesondere können die Querrillen 3 in Draufsicht auch gerade verlaufen. Die bogeninnenseitige Rillenwand 7 kann auch ohne Fase 7b ausgeführt sein, sodass die Rillenwand 7, im Querschnitt betrachtet eben ist.

### Bezugsziffernliste

- 1 .............................: schulterseitige Profilrippe
- 1a ...........................: Außenfläche
- 2 .............................: schulterseitige Umfangsrille
- 3 .............................: Querrille
- 3a ...........................: Hauptabschnitt
- 3b ...........................: Schulterabschnitt
- 3'b ..........................: Vertiefung
- 3c ...........................: Auslaufabschnitt
- 4 .............................: bogenaußenseitige Rillenkante
- 4' ............................: Fasenkante
- 5 .............................: bogeninnenseitige Rillenkante
- 5' ............................: laufstreifenaußenseitiger Kantenabschnitt
- 6 .............................: Rillengrund
- 7 .............................: bogeninnenseitige Rillenwand
- 7a ...........................: Wandabschnitt
- 7b ...........................: Fase
- 8 .............................: bogenaußenseitige Rillenwand
- 9 .............................: Flanke
- 9a ...........................: Flankenabschnitt
- 9b ...........................: Fase
- 10 ...........................: Boden
- 10a .........................: mittlerer Bodenabschnitt
- a₁, a₂ .......................: Abstand
- B₁, b₁, b₂, b_{F1} b_{F2} .....: Breite
- 1 ..............................: Linie (seitlicher Rand der Bodenaufstandsfläche)
- l₁, l₂ ........................: Erstreckungslänge
- m₁ ...........................: Mittellinie
- T₁, t₁, t₂ ..................: Tiefe
- α, β, γ, δ, ε, λ ..........: Winkel

## Patentansprüche

1. Fahrzeugluftreifen mit einem Laufstreifen mit zumindest einer von einer Umfangsrille (2) begrenzten schulterseitigen Profilrippe (1) mit einer an der Laufstreifenperipherie liegenden Außenfläche (1a),
wobei die Profilrippe (1) mit einer Vielzahl von parallel zueinander sowie gerade oder bogenförmig verlaufenden, vor der Umfangsrille (2) endenden Querrillen (3) versehen ist,
welche jeweils zwei Rillenkanten (4, 5) an der Außenfläche (1a) der Profilrippe (1), zwei von den Rillenkanten (4, 5) ausgehende Rillenwände (7, 8), einen Hauptabschnitt (3a) und einen laufstreifeninnenseitig an den Hauptabschnitt (3a) anschließenden, zur Außenfläche (1a) der Profilrippe (1) auslaufenden Auslaufabschnitt (3c) aufweisen,
**dadurch gekennzeichnet,**
**dass** der Auslaufabschnitt (3c) schmäler ausgeführt ist als der Hauptabschnitt (3a), wobei die eine Rillenwand (8) am Auslaufabschnitt (3c) endet und die andere Rillenwand (7) im Auslaufabschnitt (3c) fortgeführt ist, wobei der Auslaufabschnitt (3c) der fortgeführten Rillenwand (7) gegenüberliegend durch eine Flanke (9) begrenzt ist, welche zumindest abschnittsweise zur Außenfläche (1a) der Profilrippe (1) angefast ist und daher eine Fase (9b) aufweist, welche an der Außenfläche (1a) der Profilrippe (1) von einer Fasenkante (4') begrenzt ist, welche an die Rillenkante (4) der am Auslaufabschnitt (3c) endenden Rillenwand (8) anschließt und in Fortsetzung sowie knickfrei mit dieser Rillenkante (4) verläuft.

2. Fahrzeugluftreifen nach Anspruch 1, **dadurch gekennzeichnet, dass** der Auslaufabschnitt (3c) in Bereich radial innerhalb der Fase (9b) eine Breite (b₂) von 40% bis 60%, insbesondere von 45% bis 55%, der größten Breite (B₁) des Hauptabschnittes (3a) an der Laufstreifenperipherie aufweist.

3. Fahrzeugluftreifen nach Anspruch 1 oder 2, **dadurch gekennzeichnet, dass** der Auslaufabschnitt (3c) eine Erstreckungslänge (l₂) aufweist, welche 35% bis 70%, insbesondere von 50% bis 60%, der Erstreckungslänge (h) des Hauptabschnittes (3a) innerhalb der Bodenaufstandsfläche beträgt.

4. Fahrzeugluftreifen nach einem der Ansprüche 1 bis 3, **dadurch gekennzeichnet, dass** die Fase (9b), im Querschnitt betrachtet, zur radialen Richtung unter einem konstanten Winkel (ε) von 30° bis 55°, insbesondere von 43° bis 47°, verläuft.

5. Fahrzeugluftreifen nach einem der Ansprüche 1 bis 4, **dadurch gekennzeichnet, dass** die Fase (9b) nur über 30% bis 60% der Erstreckungslänge (l₂) des Auslaufabschnittes (3c) verläuft.

6. Fahrzeugluftreifen nach einem der Ansprüche 1 bis 5, **dadurch gekennzeichnet, dass** der Auslaufabschnitt (3c) vor der Umfangsrille (2) in einem in axialer Richtung ermittelten Abstand (a₁) von 2,0 mm bis 10,0 mm, insbesondere von mindestens 5,0 mm, endet.

7. Fahrzeugluftreifen nach einem der Ansprüche 1 bis 6, **dadurch gekennzeichnet, dass** der Auslaufabschnitt (3c) einen Boden (10) aufweist, welcher knickfrei an den Rillengrund (6) der Querrille (3) und knickfrei in die die Außenfläche (1a) der Profilrippe (1) anschließt.

8. Fahrzeugluftreifen nach Anspruch 7, **dadurch gekennzeichnet, dass** der Boden (10) einen mittleren Bodenabschnitt (10a) aufweist, welcher, im Längsschnitt der Querrille (3) betrachtet, zur radialen Richtung unter einem Winkel (λ) von 20° bis 50°, insbesondere von 25° bis 35°, verläuft.

9. Fahrzeugluftreifen nach einem der Ansprüche 1 bis 8, **dadurch gekennzeichnet, dass** die im Auslaufabschnitt (3c) fortgeführte Rillenwand (7) eine sich zumindest über den Hauptabschnitt (3a) erstreckende, zur Außenfläche (1a) der Profilrippe (1) verlaufende Fase (7b) aufweist, welche, im Querschnitt betrachtet, als gerade Linie erscheint und zur radialen Richtung unter einem Winkel (δ) verläuft, wobei der Winkel (δ) vom laufstreifenaußenseitigen Ende der Fase (7b) zum laufstreifeninnenseitigen Ende der Fase (7b) kontinuierlich zunimmt, sodass die Fase (7b) eine sich gegenüber der radialen Richtung verdrehende Fläche ist.

10. Fahrzeugluftreifen nach Anspruch 9, **dadurch gekennzeichnet, dass** die Fase (7b) im Auslaufabschnitt (3c) der Querrille (3) ausläuft.

11. Fahrzeugluftreifen nach Anspruch 9 oder 10, **dadurch gekennzeichnet, dass** die Fase (7b), im Querschnitt betrachtet, eine in die Laufstreifenperipherie projizierte Breite (b_{F1}) aufweist, welche innerhalb des Hauptabschnittes (3a) und des Auslaufabschnittes (3c) ausgehend vom laufstreifenaußenseitigen Ende des Hauptabschnittes (3a) kontinuierlich in Richtung zur Laufstreifeninnenseite abnimmt.

12. Fahrzeugluftreifen nach Anspruch 11, **dadurch gekennzeichnet, dass** die in die Laufstreifenperipherie projizierte Breite (b_{F1}) der Fase (7b) an der breitesten Stelle der Fase (7b) 1,5 mm bis 4,0 mm, insbesondere höchstens 3,0 mm, beträgt.

13. Fahrzeugluftreifen nach einem der Ansprüche 9 bis 12, **dadurch gekennzeichnet, dass** die Fase (7b), im Querschnitt betrachtet, über ihre Erstreckung in radialer Richtung in einer konstanten Tiefe (t₁) von 0,7 mm bis 2,0 mm, insbesondere von mindestens 1,0 mm, endet.

14. Fahrzeugluftreifen nach einem der Ansprüche 1 bis 13, **dadurch gekennzeichnet, dass** die Querrillen (3) in Draufsicht bogenförmig verlaufen, wobei die Rillenwand (8), welche am Auslaufabschnitt (3c) endet, die bogenaußenseitige Rillenwand (8) ist und die Rillenwand (7), welche in den Auslaufabschnitt (3c) fortgeführt ist, die bogenaußeninnenseitige Rillenwand (7) ist.

## Claims

1. Pneumatic vehicle tyre comprising a tread with at least one shoulder-side profile rib (1), which is delimited by a circumferential groove (2) and has an outer surface (1a) lying at the periphery of the tread,
wherein the profile rib (1) is provided with a multiplicity of transverse grooves (3), running parallel to one another and in a straight or arcuate form and ending before the circumferential groove (2),
which have in each case two groove edges (4, 5) at the outer surface (1a) of the profile rib (1), two groove walls (7, 8), extending from the groove edges (4, 5), a main portion (3a) and a run-out portion (3c), which adjoins the main portion (3a) on the inner side of the tread and runs out to the outer surface (1a) of the profile rib (1),
**characterized**
**in that** the run-out portion (3c) is made narrower than the main portion (3a), wherein the one groove wall (8) ends at the run-out portion (3c) and the other groove wall (7) is continued in the run-out portion (3c), wherein the run-out portion (3c) of the continued groove wall (7) is delimited on the opposite side by a flank (9), which is bevelled, at least in a certain portion, in relation to the outer surface (1a) of the profile rib (1) and therefore has a bevel (9b), which is delimited at the outer surface (1a) of the profile rib (1) by a bevel edge (4'), which adjoins the groove edge (4) of the groove wall (8) ending at the run-out portion (3c) and runs as a continuation and without any kinks with this groove edge (4).

2. Pneumatic vehicle tyre according to Claim 1, **characterized in that** the run-out portion (3c) has in the region radially inside the bevel (9b) a width (b₂) of 40% to 60%, in particular of 45% to 55%, of the greatest width (B₁) of the main portion (3a) at the periphery of the tread.

3. Pneumatic vehicle tyre according to Claim 1 or 2, **characterized in that** the run-out portion (3c) has a length of extent (l₂) that is 35% to 70%, in particular 50% to 60%, of the length of extent (l₁) of the main portion (3a) within the ground contact area.

4. Pneumatic vehicle tyre according to one of Claims 1 to 3, **characterized in that**, when seen in cross section, the bevel (9b) runs in relation to the radial direction at a constant angle (ε) of 30° to 55°, in particular of 43° to 47°.

5. Pneumatic vehicle tyre according to one of Claims 1 to 4, **characterized in that** the bevel (9b) runs only over 30% to 60% of the length of extent (l₂) of the run-out portion (3c).

6. Pneumatic vehicle tyre according to one of Claims 1 to 5, **characterized in that** the run-out portion (3c) ends before the circumferential groove (2) at a distance (a₁), determined in the axial direction, of 2.0 mm to 10.0 mm, in particular of at least 5.0 mm.

7. Pneumatic vehicle tyre according to one of Claims 1 to 6, **characterized in that** the run-out portion (3c) has a base (10), which adjoins the groove base (6) of the transverse grooves (3) without any kinks and in the outer surface (1a) of the profile rib (1) without any kinks.

8. Pneumatic vehicle tyre according to Claim 7, **characterized in that** the base (10) has a middle base portion (10a), which, when seen in the longitudinal section of the transverse groove (3), runs in relation to the radial direction at an angle (λ) of 20° to 50°, in particular of 25° to 35°.

9. Pneumatic vehicle tyre according to one of Claims 1 to 8, **characterized in that** the groove wall (7) continued in the run-out portion (3c) has a bevel (7b), which extends at least over the main portion (3a), runs to the outer surface (1a) of the profile rib (1) and, when seen in cross section, appears as a straight line and runs in relation to the radial direction at an angle (δ), wherein the angle (δ) increases continuously from the end of the bevel (7b) on the outer side of the tread to the end of the bevel (7b) on the inner side of the tread, so that the bevel (7b) is a surface area that is turned with respect to the radial direction.

10. Pneumatic vehicle tyre according to Claim 9, **characterized in that** the bevel (7b) runs out in the run-out profile (3c) of the transverse groove (3).

11. Pneumatic vehicle tyre according to Claim 9 or 10, **characterized in that**, when seen in cross section, the bevel (7b) has a width (b_{F1}) projected into the periphery of the tread which, starting from the end of the main portion (3a) on the outer side of the tread, decreases continuously in the direction of the inner side of the tread within the main portion (3a) and the run-out portion (3c).

12. Pneumatic vehicle tyre according to Claim 11, **characterized in that** the width (b_{F1}), projected into the periphery of the tread, of the bevel (7b) at the broadest point of the bevel (7b) is 1.5 mm to 4.0 mm, in particular at most 3.0 mm.

13. Pneumatic vehicle tyre according to one of Claims 9 to 12, **characterized in that**, when seen in cross section, the bevel (7b) ends at a constant depth (t₁) of 0.7 mm to 2.0 mm, in particular of at least 1.0 mm, over its extent in the radial direction.

14. Pneumatic vehicle tyre according to one of Claims 1 to 13, **characterized in that**, in plan view, the transverse grooves (3) run in the form of an arc, wherein the groove wall (8) that ends at the run-out portion (3c) is the groove wall (8) on the outer side of the arc and the groove wall (7) that is continued into the run-out portion (3c) is the groove wall (7) on the outer inner side of the arc.

## Revendications

1. Pneumatique de véhicule comprenant une bande de roulement comprenant au moins une nervure profilée (1) du côté de l'épaulement, limitée par une rainure périphérique (2), avec une surface extérieure (1a) située au niveau de la périphérie de la bande de roulement,
la nervure profilée (1) étant pourvue d'une pluralité de rainures transversales (3) s'étendant parallèlement les unes aux autres ainsi que rectilignes ou courbes, se terminant avant la rainure périphérique (2),
lesquelles présentent chacune deux arêtes de rainure (4, 5) au niveau de la surface extérieure (1a) de la nervure profilée (1), deux parois de rainure (7, 8) partant des arêtes de rainure (4, 5), une portion principale (3a) et une portion de sortie (3c) se raccordant du côté intérieur de la bande de roulement à la portion principale (3a), se terminant vers la surface extérieure (1a) de la nervure profilée (1),
**caractérisé en ce que**
la portion de sortie (3c) est plus étroite que la portion principale (3a), l'une des parois de rainure (8) se terminant au niveau de la portion de sortie (3c) et l'autre paroi de rainure (7) se poursuivant dans la portion de sortie (3c),
la portion de sortie (3c) à l'opposé de la paroi de rainure prolongée (7) étant limitée par un flanc (9) qui est biseauté au moins en partie vers la surface extérieure (1a) de la nervure profilée (1) et qui présente par conséquent un biseau (9b) qui est limité au niveau de la surface extérieure (1a) de la nervure profilée (1) par une arête de biseau (4') qui se raccorde à l'arête de rainure (4) de la paroi de rainure (8) se terminant au niveau de la portion de sortie (3c) et s'étend dans le prolongement de cette arête de rainure (4) sans rupture de courbe.

2. Pneumatique de véhicule selon la revendication 1, **caractérisé en ce que** la portion de sortie (3c) présente, dans la région radialement à l'intérieur du biseau (9b), une largeur (b₂) de 40 % à 60 %, en particulier de 45 % à 55 %, de la plus grande largeur (B₁) de la portion principale (3a) au niveau de la périphérie de la bande de roulement.

3. Pneumatique de véhicule selon la revendication 1 ou 2, **caractérisé en ce que** la portion de sortie (3c) présente une longueur d'étendue (l₂) qui représente 35 % à 70 %, en particulier 50 % à 60 %, de la longueur d'étendue (l₁) de la portion principale (3a) à l'intérieur de la surface d'appui au sol.

4. Pneumatique de véhicule selon l'une quelconque des revendications 1 à 3, **caractérisé en ce que** le biseau (9b), vu en coupe transversale, s'étend suivant un angle constant (ε) de 30° à 55°, en particulier de 43° à 47° par rapport à la direction radiale.

5. Pneumatique de véhicule selon l'une quelconque des revendications 1 à 4, **caractérisé en ce que** le biseau (9b) s'étend seulement sur 30 % à 60 % de la longueur d'étendue (l₂) de la portion de sortie (3c) .

6. Pneumatique de véhicule selon l'une quelconque des revendications 1 à 5, **caractérisé en ce que** la portion de sortie (3c) se termine avant la rainure périphérique (2) à une distance (a₁) déterminée dans la direction axiale de 2,0 mm à 10,0 mm, en particulier d'au moins 5,0 mm.

7. Pneumatique de véhicule selon l'une quelconque des revendications 1 à 6, **caractérisé en ce que** la portion de sortie (3c) présente un fond (10) qui se raccorde sans rupture de courbe au fond de rainure (16) de la rainure transversale (3) et sans rupture de courbe dans la surface extérieure (1a) de la nervure profilée (1).

8. Pneumatique de véhicule selon la revendication 7, **caractérisé en ce que** le fond (17) présente une portion de fond central (10a) qui, vu en coupe longitudinale de la rainure transversale (3), s'étend suivant un angle (À) de 20° à 50°, en particulier de 25° à 35° par rapport à la direction radiale.

9. Pneumatique de véhicule selon l'une quelconque des revendications 1 à 8, **caractérisé en ce que** la paroi de rainure (7) prolongée dans la portion de sortie (3c) présente un biseau (7b) s'étendant au moins sur la portion principale (3a), s'étendant vers la surface extérieure (1a) de la nervure profilée (1), lequel, vu en coupe transversale, apparaît comme une ligne droite et s'étend suivant un angle (δ) par rapport à la direction radiale, l'angle (δ) augmentant depuis l'extrémité du biseau (7b) du côté extérieur de la bande de roulement jusqu'à l'extrémité du biseau (7b) du côté intérieur de la bande de roulement, de sorte que le biseau (7b) soit une surface tournant par rapport à la direction radiale.

10. Pneumatique de véhicule selon la revendication 9, **caractérisé en ce que** le biseau (7b) se termine dans la portion de sortie (3c) de la rainure transversale (3).

11. Pneumatique de véhicule selon la revendication 9 ou 10, **caractérisé en ce que** le biseau (7b), vu en coupe transversale, présente une largeur (b_{F1}) projetée dans la périphérie de la bande de roulement, qui diminue à l'intérieur de la portion principale (3a) et de la portion de sortie (3c) à partir de l'extrémité de la portion principale (3a) du côté extérieur de la bande de roulement en continu dans la direction du côté intérieur de la bande de roulement.

12. Pneumatique de véhicule selon la revendication 11, **caractérisé en ce que** la largeur (b_{F1}) du biseau (7b), projetée dans la périphérie de la bande de roulement, mesure à l'endroit le plus large du biseau (7b), 1,5 mm à 4,0 mm, en particulier au maximum 3,0 mm.

13. Pneumatique de véhicule selon l'une quelconque des revendications 9 à 12, **caractérisé en ce que** le biseau (7b), vu en coupe transversale, se termine, sur son étendue dans la direction radiale, à une profondeur constante (t₁) de 0,7 mm à 2,0 mm, en particulier d'au moins 1,0 mm.

14. Pneumatique de véhicule selon l'une quelconque des revendications 1 à 13, **caractérisé en ce que** les rainures transversales (3) s'étendent sous forme arquée en vue de dessus, la paroi de rainure (8) qui se termine au niveau de la portion de sortie (3c) étant la paroi de rainure (8) du côté extérieur de l'arc et la paroi de rainure (7) qui se prolonge dans la portion de sortie (3c) étant la paroi de rainure (7) du côté intérieur extérieur de l'arc.
